# EUROPEAN PATENT APPLICATION

(11) **EP 0 876 786 A1**
(43) Date of publication of application: **11.11.1998**
(21) Application number: 98107189.7
(22) Date of filing: 21.04.1998
(51) Int. Cl.: A47J 41/00, B65D 81/38

(54) **Method for making thermally insulated synthetic resin implement**

(30) Priority: 07.05.1997 JP 117310/97
(71) Applicant: Nippon Sanso Corporation, Tokyo 105-0003 (JP)
(72) Inventor: Tanaka, Atsuhiko, c/o Nippon Sanso Corporation, Tokyo 105-0003 (JP); Yamada, Masashi, c/o Nippon Sanso Corporation, Tokyo 105-0003 (JP); Fuji, Takafumi, c/o Nippon Sanso Corporation, Tokyo 105-0003 (JP); Furuyama, Kensuke, c/o Nippon Sanso Corporation, Tokyo 105-0003 (JP)
(74) Representative: Munk, Ludwig, Dipl.-Ing.

(57) **Abstract**

A double-walled structure is assembled by arranging an outer shell member (3) over an inner shell member (2) with an intervening space section (4). The shells (2, 3) are joined by bonding the peripheries (2a, 3a) of the shell members (2, 3). Air or a gas having a lower thermal conductivity than air is introduced into the space section (4) through a gas inlet opening (3b) to a certain pressure. The peripheral section (z) of the gas inlet opening (3b) is then fusion sealed to produce a thermally insulated implement.

## Description

### BACKGROUND OF THE INVENTION

### Field of the Invention

The present invention relates in general to a method for making thermally insulated implements having a double-walled structure with an intervening insulation space, and relates in particular to a method for filling the insulation space with a low thermal conductivity gas and hermetically sealing the gas therein. The implement is typically a container which may be an insulated cup, thermos container, cooler box, ice box, thermos lunch container as well as insulated lids for use therewith.

This application is based on a patent application No. Hei 9-117310 filed in Japan, the content of which is incorporated therein by reference.

### Description of the Related Art

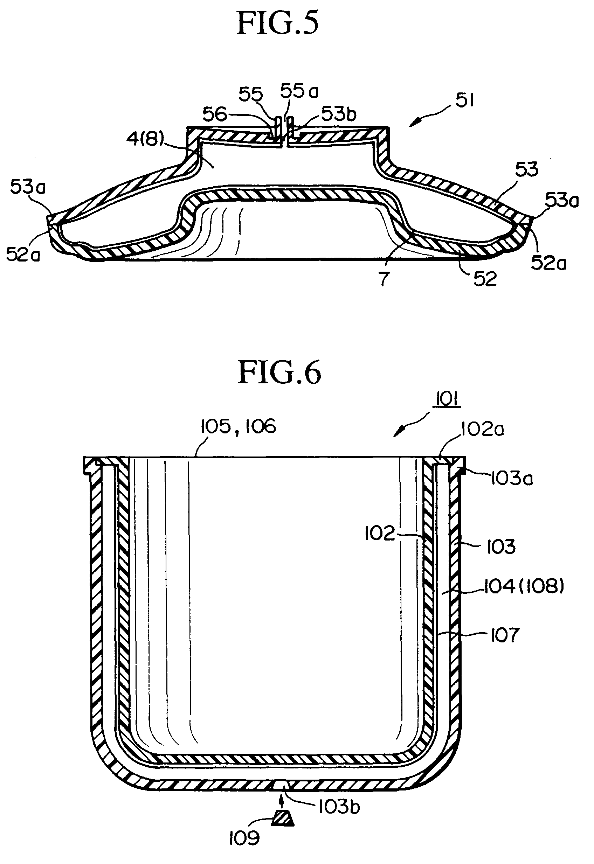

A conventional method of making a thermally insulated cup will be explained with reference to Figure 6, which shows an example of such double-walled containers. A thermally insulated cup 101 made of a synthetic resin material has a double-walled structure, and is assembled by placing a bowl-shaped inner shell member 102 inside another bowl-shaped outer shell member 103 of a slightly larger size, so as to provide a space section 104 therebetween, and joining the flange sections 102a, 103a, respectively of the inner and outer shell members 102, 103 at their mouth peripheries. The space section 104 is made into a thermal insulation layer 108 by first evacuating the space section 104 through a gas inlet opening 103b, which had been provided on the outer shell member 103, and then filling the space 104 with air and at least one type of gas having a lower thermal conductivity, such as krypton, xenon and argon, and finally sealing the opening 103b with a sealing plate 109 so as to provide a hermetic sealed space therein. The inner shell member 102 is provided with a radiation shielding material, made of a metallic foil or metallic plating comprised by aluminum, copper or other metallic substances, on the inside surface which faces the space section 104.

However, in thermally insulated containers of such a design, it is essential that the sealing is performed in a manner to prevent the low thermal conductivity gas from leaking out of the space section 104. Therefore, the sealing methods relying on an adhesive to attach the sealing plate 109 to the gas inlet opening 103b require that the sealing plate 109 be properly coordinated with the gas inlet opening 103b, requiring close management of all aspects of a precision production operation, from matching the shape and dimensions of the parts as well as controlling the appropriate amount of the adhesive material to be applied and its uniformity. It is furthermore difficult to judge the quality of hermetic sealing of the inlet opening 103b obtained by adhesive bonding with the sealing plate 109 from an external appearance of the joint, and in some cases, improper sealing is discovered only after the container has been put to use. Another difficulty is that a degradation of the thermal insulation can occur over time, because of leaking of the insulating gas from the space section 104 due to problems such as non-uniform coating of the adhesive material and aging of the joint.

Additionally, such thermally insulated containers are made from polypropylene or polyethylene resin, both of which are optimally practical because of their good moisture, heat resistance and low material cost. These advantages of synthetic resin materials are offset by troublesome bonding properties of typical adhesive materials, thus making sealing using the sealing plate 109 a cumbersome operation.

### SUMMARY OF THE INVENTION

An object of the present invention is to provide a method for reliably making a thermal insulation layer of a thermally insulated, synthetic resin formed implement having a double-walled structure. Specifically, the present invention provides a method of sealing a gas inlet opening provided for the purpose of establishing a thermal insulation layer in a space section comprised by the double-walled structure, in an direct manner so as to simplify and reduce the effort in managing the tasks while assuring a reliable hermetic sealing of the opening. It is further aimed at lowering the manufacturing cost and developing a flexible method which would be applicable to different types of thermoplastic synthetic resins.

The object has been achieved in a method for making a thermally insulated implement comprising the steps of: assembling an outer shell member, having a concave-shape and is made of a synthetic resin, over an inner shell member, having a similar but smaller concave-shape and is made of the synthetic resin, so as to provide a space section between the outer shell member and the inner shell member; producing a double-walled structure of an integrally bonded unit by joining an open mouth of the outer shell member to an open mouth of the inner shell member at mouth peripheries; introducing air or a gaseous substance, having a lower thermal conductivity than air, into the space section through a gas inlet opening provided on one of the outer shell member or the inner shell member; and fusion sealing the gas inlet opening by melting a peripheral section surrounding the gas inlet opening.

According to the present method, because sealing is performed by melting the synthetic resin material comprising the shell member around the gas inlet opening, the opening can be sealed extremely tightly, thereby providing a reliable hermetic sealing of the implement to isolate the insulation layer formed between the double-walled structure.

Furthermore, problematic aspects of the conventional sealing methods such as sealing plates and adhesives have been eliminated to lead to a low production cost. Also, detailed and expert attention to production tasks required in the conventional sealing methods have been eliminated, such as accurate positioning of parts, matching and compatibility of parts with holes, selection of an adhesive appropriate to a synthetic resin, concern over the quality of synthetic resin, uniformity of adhesive coating, to name a few. It is quite obvious that the simple approach developed in the present method leads to improving the efficiency of producing a reliable hermetic sealing.

Additionally, concerns over the time-dependent degradation behavior of the adhesive material and the resulting loss of thermal insulation in the implement have also been eliminated so that a long service life of the product can be assured.

Also, because the present method of providing hermetic sealing relies on fusion sealing of the material surrounding the gas inlet opening which is made of the same synthetic resin material as shell synthetic resin material, the method is applicable to various types of synthetic resins, including polypropylene and polyethylene, which are known to be difficult materials for adhesive bonding.

### BRIEF DESCRIPTION OF THE DRAWINGS

Figure 1 is a cross sectional view of a bowl-shaped thermally insulated container of a synthetic resin molded double-walled structure for explaining an example of the method of the present invention.

Figure 2 is a schematic drawing of an example of the gas charging apparatus for use with the method of the present invention.

Figure 3 is a partial cross sectional view of an example of a gas inlet opening suitable for use in the method of the present invention.

Figure 4A is a partial cross sectional view of another example of the gas inlet opening suitable for use in the method of making a double-walled container molded from a double-layered synthetic resin material.

Figure 4B & 4C are schematic illustrations of the processing steps for sealing the gas inlet opening shown in Figure 4A.

Figure 5 is a cross sectional view of a thermally insulated lid of a synthetic resin molded, double-walled structure.

Figure 6 is a cross sectional view of a conventional method of making a synthetic resin molded thermally insulated container of a double-walled structure.

### DESCRIPTION OF THE PREFERRED EMBODIMENTS

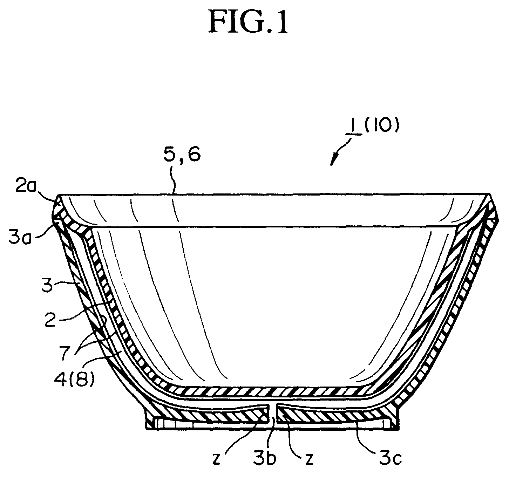

The present method of making a thermally insulated container is distinguished by a special fusion sealing method employed. The seal is achieved by melting the material constituting the wall member around the gas inlet opening which may be provided on either the inner or outer shell member. The shell members are assembled, with an intervening space section, to be joined at their mouth peripheries, after which the space section is filled with a low thermal conductivity gas. The invention will be explained with reference to the drawings presented in Figures 1∼5.

Figure 1 is a cross sectional view of a dish- or bowl-shaped thermally insulated container 1. The thermally insulated container 1 is made by first attaching a radiation shield 7 such as an aluminum or copper foil on the outer surface (convex surface) of the inner shell member 2 and placing the inner shell member 2 on the inside of an outer shell member 3 by matching their contours and providing a space section 4 therebetween. The inner surface (concave surface) of the outer shell member 3 may also be provided with, as necessary, with a similar radiation shield 7, such as an aluminum or copper foil. Then, the outer peripheries 2a, 3a of the respective opening sections 5, 6, of the inner shell member 2 and the outer shell member 3 are joined by vibratory welding and so on, to make a dish-shaped container 10 of a double-walled structure.

Next, a gas inlet opening 3b is made on the bottom section 3c of the outer shell member 3. The diameter of the gas inlet opening 3b is in a range of 0.1∼3.0 mm, or more preferably between 1.0∼2.0 mm. The size of the opening diameter is determined by considering the practical requirements for ease of gas evacuation and gas filling, and reliability of fusion sealing of the opening. More specifically, the hole diameter less than 0.1 mm is not desirable because a high degree of fluid resistance is encountered during the gas evacuation and gas filling steps of the space section 4 so that the working time is prolonged and the production efficiency becomes low. When the opening diameter is larger than 3.0 mm, there is a danger of causing excessive consumption of the material around the opening to achieve complete sealing of the hole leading to possible thinning and tear in the shell material surrounding the gas inlet opening 3b.

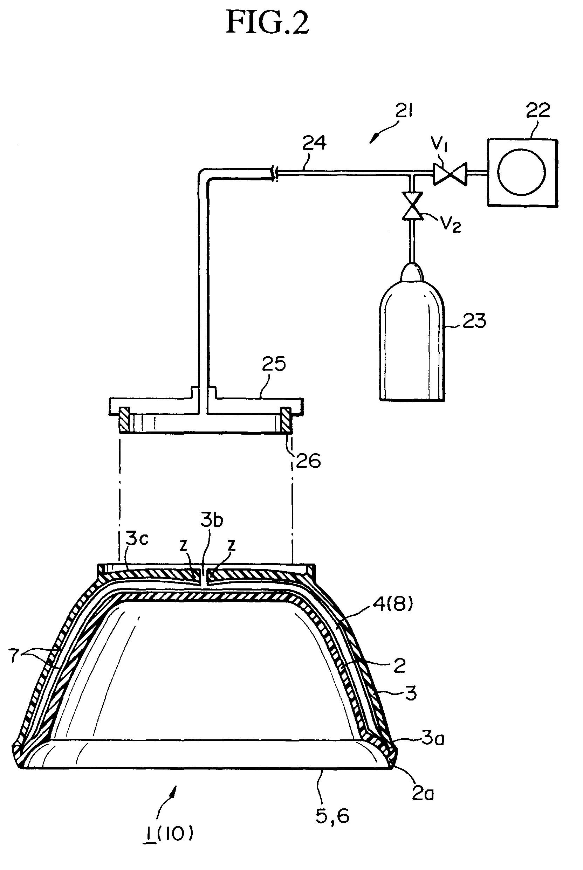

Next, a low thermal conductivity gas is introduced into the space section 4 through the gas inlet opening 3b. This operation is carried out with the gas admission apparatus 21 shown in Figure 2.

Specifically, the gas admission apparatus 21 is comprised of a vacuum pump 22, a storage tank 23 for a low thermal conductivity gas, and a gas inlet coupler 25 of a flange shape for attaching to the container to be filled. The gas inlet coupler 25 is communicated with the vacuum pump 22 and the storage tank 23 through a pipe 24, and is provided with a packing ring 26 on its bottom surface.

The low thermal conductivity gas may include a gas containing at least one of krypton, xenon and argon gases, all of which have a lower thermal conductivity than air. The dish-shaped container 10 is placed in an inverted position so that the bottom surface 3c faces upwards, and the gas inlet coupler 25 is attached with the packing ring 26 on its bottom surface contacting the bottom surface 3c of the outer shell member 3. Next, the space section 4 is evacuated by activating the vacuum pump 22 to produce a vacuum of lower than 10 Torr, and then the space section 4 is pressurized to about 1.1x10⁵ Pa, which is slightly higher than an atmospheric pressure, by filling with the gas supplied from the gas tank 23 through the pipe 24 and gas inlet coupler 25. Next, the gas inlet coupler 25 is detached, and the material around the gas inlet opening 3b is heated by such known means of heating as electrical resistance heating, vibratory welding, ultrasonic welding, high frequency inductive heating, gas burner or laser heating, to seal off the gas inlet opening 3b.

In the present invention, because the synthetic resin material surrounding the gas inlet opening 3b of the outer shell member 3 is fusion welded to seal, proper sealing can be assured by making the shell thickness of the peripheral section z surrounding the gas inlet opening 3b slightly thicker than the average thickness in other locations of the shell, thereby avoiding such problems as thinning and melt-through caused by local melting of the synthetic resin material.

In the above embodiment, the gas inlet opening 3b was provided on the outer shell member 3, but the present invention is not limited to this approach, and it is obvious that the opening may be provided on the inner shell member 2, and similarly, the location of the opening 3b is not limited to the bottom surface 3c, such that any other locations are quite possible. Also, in the above embodiment, the gas inlet opening 3b was made after joining the inner and outer shell members 2, 3, but it is allowable to pre-fabricate the opening on either the inner or outer shell member 2, 3 before the members 2, 3 are joined, or an opening of a desired shape may be formed during the molding step of the inner or outer shell members 2, 3.

It should be noted that all aspects of the embodiment described above are applicable to another container representing a different configuration of the gas inlet opening which will be presented below, unless otherwise indicated.

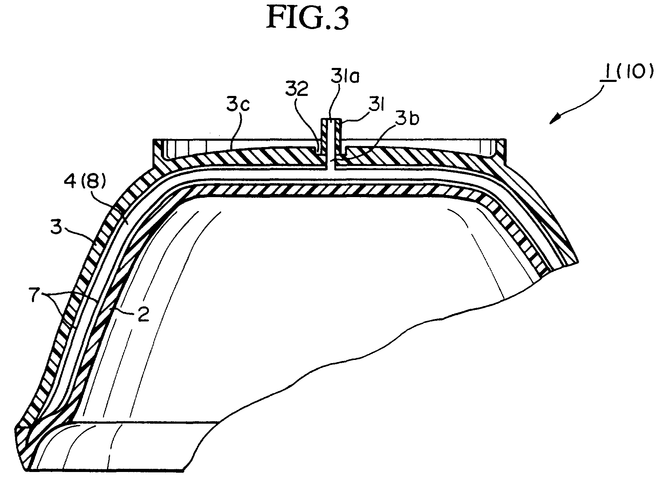

Figure 3 is a cross sectional view of another embodiment of the gas inlet structure and explanations will be given with reference to the bowl shaped thermally insulated container 1 which was shown in Figure 1. The parts which are the same as those in Figure 1 are given the same reference numerals, and their explanations will be omitted.

The container 10 of this embodiment has a double-walled structure and is comprised of a bowl-shaped inner shell member 2 made of a synthetic resin which is joined to another bowl-shaped outer shell member 3 made of a synthetic resin with a space section 4 therebetween. To introduce a low thermal conductivity gas into the space section 4, a gas inlet opening 3b is provided on the bottom surface 3c of the outer shell member 3, for example. On the outer surface of the outer shell member 3, a protrusion section 31 is provided to extend from the peripheral section of the gas inlet opening 3b, and a gas passage 31a is provided within the protrusion section 31 to communicate with the gas inlet opening 3b.

The gas is introduced into the space section 4 by abutting the gas inlet coupler 25 of the gas admission apparatus 21 to the bottom surface 3c of the outer shell member 3 having the gas inlet opening 3b, then the space section 4 is evacuated and filled with the low conductivity gas to a pressure of about 1.1x10⁵ Pa. After this step, using a similar heating technique as explained with reference to Figure 2, the protrusion section 31 is fused to close the gas passage 31a, thereby sealing the gas inlet opening 3b to the gas passage 31a. It should be mentioned that the protrusion section 31 should be preferably formed integrally with the outer shell member 3, at the time of molding the outer shell member 3 into a bowl shape, to obtain a reliable hermetic sealing.

According to the method of this embodiment, the hermetic sealing of the gas inlet opening is carried out by fusing the protrusion section 31 extending from the outer shell member 3 to seal off the gas passage 31a which communicates with the gas inlet opening 3b. Therefore, although the temperature of the operation is high to melt the synthetic resin material of the same type as the shell member, but the shell portion itself is not directly affected by the high heat so that there is no danger of damaging the shell member itself. Additionally, because the part to be fused is protruding out from the shell member, fusion operation can be directed easily and reliably. If there is insufficient synthetic resin material for fusion, a small chip of the same material as the shell synthetic resin can be supplemented at the tip of the protrusion section 31 and fused together with the protrusion section 31 to make the seal.

Further enhancement may be made to the embodiment by providing a depressed channel section 32 around the outer periphery of the base section of the protrusion section 31 on the bottom surface 3c of the outer shell member 3. This is desirable because, when the gas inlet opening 3b is being sealed, a melted material formed by heating the protrusion section 31 can then flow into the channel section 32 to fill the depression. By doing so, not only the gas inlet opening 3b is securely sealed, but also the protrusion section 31 is made to disappear by dripping into the depression of the channel section 32. Therefore, not only the external appearance is improved but, because there is no longer a protruding object, there is no need to undertake wasteful concealment. This arrangement is further advantageous, because by eliminating the protrusion which is prone to impact load, possible damage to the seal is reduced.

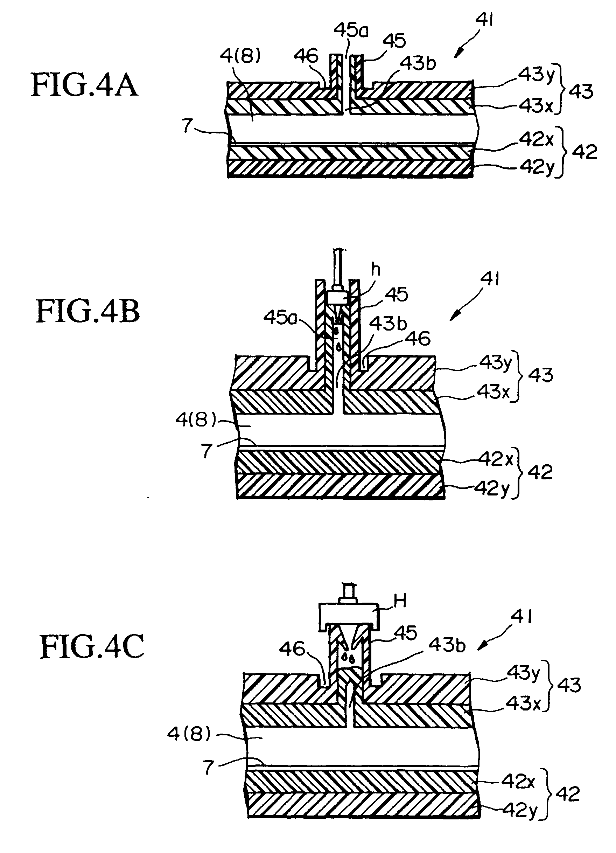

Next embodiment relates to the use of a container made of layers of two types of synthetic resin material having different functional properties such as moisture resistance or gas barrier properties. For example, the shell members of the inner and outer shell members 2, 3 of the container 10 shown in Figure 1 could be made from a double-layered material comprising two different synthetic resins. This embodiment will be explained with reference to Figure 4, and as in the previous embodiment, the parts which are similar to those in Figures 1, 2 are referred to by the same reference numerals, and their explanations will be omitted.

Figure 4 is a cross sectional view of a gas inlet section 41 of a double-walled container comprised of an inner shell member 42 and an outer shell member 43, where each member is made by laminating two synthetic resins, having different functional properties, into a so-called double-layered material. More specifically, for the inner shell member 42, the inside surface 42x which faces the space section 4 and the outside surface 42y which faces the atmosphere, and for the outer shell member 43, the inside surface 43x which faces the space section 4 and the outside surface 43y which faces the atmosphere, respectively, are made of synthetic resins having different functional properties. A synthetic resin material which exhibits a superior gas barrier property is used to make both inside surfaces 42x, 43x, which face the space section 4, of the inner and outer shell members 42, 43 to prevent leaking of the low thermal conductivity gas charged in the space section 4. A synthetic resin material which exhibits a superior resistance to external variables such as heat or moisture is used to make both outer surfaces 42y, 43y which face the atmosphere.

Some examples of the synthetic resin materials which exhibit superior gas barrier property are those that are selected according to ASTM D 1434-58 having a gas permeability factor of less than 1g/m²/24 hr/atm for gases such as oxygen (O₂), nitrogen (N₂) and carbon dioxide (CO₂). Specifically, polyesters such as polyethylene telephthalate, polybutylene telephthalate, or polyethylene naphthalate, polyamide, ethylenevinyl alcohol, polyacryronytryl and polyvinyl alcohol are examples of such synthetic resin materials.

Synthetic resin materials resistant to heat or moisture are those that are selected according to ASTM D 648 having a deformation temperature in excess of 100 °C and those that are selected according to JIS Z0208 having moisture permeability of less than 50 g/m²/24 hr. Some examples are polypropylene and heat- and moisture-resistant polycarbonate. Here, moisture permeability according to JIS Z0208 is the amount of moisture which passes through a boundary surface in a 24 hour period at a temperature of 40 °C, wherein the sample material is used as the boundary surface and the air on one side is maintained at a humidity of 90% and the air on the other side is maintained in a dry condition by means of the use of a moisture absorbent.

The inner shell member 42 and the outer shell member 43 which consist of double-layered materials are joined into an integral double-walled container having the respective inside surfaces 42x and 43x, made of a synthetic resin surface having a superior gas barrier property to face the space section 4. To produce a thermally insulated layer 8 within the space section 4, a gas inlet opening 43b, communicating with the space section 4, is formed on the outer shell member 43 (or the inner shell member 42), and using the gas admission apparatus 21 shown in Figure 2, a low thermal conductivity gas is introduced into the space section 4 to a certain pressure, and then, the region surrounding the gas inlet opening 43b is melted thermally to fuse the gas inlet opening 43b to seal off the container

As shown in Figure 4B, it is preferable to provide a protrusion section 45 on the outer surface 43y, facing the atmosphere, of the gas inlet opening 43b so that the gas passage 45a of the protrusion section 45 communicates with the gas inlet opening 43b. By providing such a protrusion section 45, after filling the space section 4 with the low thermal conductivity gas, the gas inlet opening 43b can be sealed off by heating to melt the protrusion section 45, thereby sealing the gas passage 45a with the melted synthetic resin to seal off the gas inlet opening 43b. This procedure not only simplifies the sealing task but, because the shell member is not subjected to direct heat, there is no danger of thinning the shell material or damaging the shell integrity, thereby enabling to produce a reliable seal. Further, it is preferable to produce the protrusion section 45 (having the gas passage 45a to communicate with the gas inlet opening 43b) by molding with double-layered materials so that the surface facing the gas passage 45a is made of a synthetic resin having a superior gas barrier property and the surface facing the atmosphere is made of a synthetic resin having a superior resistant to moisture.

When sealing the gas passage 45a by melting the protrusion section 45 made from such a double-layered material, it is preferable to carry out the fusion process separately for each synthetic resin, so that the same type of synthetic resins are melted, because, when the double-layered material is melted concurrently, different resins fuse to each other and may cause problems in producing a reliable seal. This process can be carried out as follows. First, as illustrated in Figure 4B, a heating iron h, of a similar diameter as the diameter of the gas passage 45a, is inserted into the gas passage 45a along its inner surface, which is the layer having a superior gas barrier property, to melt the facing surface so as to seal the gas passage 45a by fusion. This is followed by a step illustrated in Figure 4C so that a heating iron H, of a similar inside diameter as the outer diameter of the protrusion 45, can be passed through the outer surface of the protrusion section 45 in contact with the layer having a moisture resistance so that the synthetic resin comprising the moisture-resistant synthetic resin can be melted to flow on top of the previously melted gas barrier synthetic resin.

By following such a sealing procedure, reliable seals are produced because the same type of synthetic resins are fused together so that the fused interface is extremely sound. Additionally, because the seal section is formed by the double-layered material, made up of a gas barrier synthetic resin and a moisture resistant synthetic resin, in the same way as the inner and outer shell members 42, 43, thermal insulation property of the container is similarly maintained.

It is also preferable to provide a depressed channel 46 around the base of the protrusion section 45 formed along the outer region of the gas inlet opening 43b. By doing so, during the process of sealing the gas inlet opening 43b, the synthetic resin material of the protrusion section 45 facing the atmosphere can be melted to fill the channel 46. This process serves to fill the channel to reinforce its thickness, and provides smooth shell surface to contribute to an aesthetic appearance of the sealed section.

Although the above embodiments were illustrated in terms of a bowl- or dish-shaped containers, the present invention is not limited by those specific examples given. It is obvious that other thermally insulated double-walled containers could include insulated cups, cooler boxes, thermos containers and thermos lunch containers. Additionally, as shown in Figure 5, a thermally insulated lid 51 can also be produced in a double-walled configuration to serve thermos purposes for maintaining warmth and coldness.

The thermally insulated lid 51 shown in Figure 5 is comprised by an inner shell member 52 for the bottom surface and an outer shell member 53 for the top surface with a space section 4 therebetween. The peripheral sections 52a, 53a of the inner and outer shell members 52, 53 are joined together to form a double-walled structure, and a low thermal conductivity gas is introduced into the space section 4 through a gas inlet opening 53b, and the gas inlet opening 53b is sealed off.

In this embodiment, the gas inlet opening 53b is provided on the outer shell member 53, but the present invention is not limited to this arrangement, and it is obvious that the opening 53b can be provided equally effectively on the inner shell member 52. The location of the gas inlet opening 53b is also not limited to the location shown in the embodiment, and other locations would be quite suitable. Furthermore, the gas inlet opening 53b can be formed before the inner and outer shell members 52, 53 are joined together or it can be provided by drilling after joining, or it may be formed during the molding process for making the inner or outer shell member 52, 53 along with the protrusion section 55 and the accompanying gas inlet opening 53b.

### Example

Actual example of manufacturing process for making the bowl-shaped double-walled container structure for synthetic resin shown in Figure 3 will be presented in the following.

The material for making the inner and outer shell members 2, 3 was a mixture of polycarbonate and polyester resins. Each member was produced by injection molding into a suitable bowl shape. The mold for the bottom surface 3c of the outer shell member 3 was fabricated to produce the gas inlet opening 3b and the protrusion section 31, with the gas passage 31a communicating with the gas inlet opening 3b, as well as the channel 32 around the outer periphery of the base section of the protrusion section 31. The diameter of the gas inlet opening 3b was 1.2 mm and the diameter of the gas passage 31a was 1.2 mm.

Next, an aluminum foil 7, as a radiation reflector, was bonded to the inside surfaces (facing the space section 4) of the inner and outer shell members 2, 3, and the members 2, 3 were assembled into a container shape with the intervening space section 4. The peripheries 2a, 3a of the opening sections 5, 6 of each shell member 2, 3 were joined using vibratory welding to produce a double-walled container 10 comprised by integrally bonded inner shell member 2 and outer shell member 3.

Next, the double-walled container 10 was placed so that the bottom surface 3c faces upwards, and using the gas evacuation and gas filling apparatus 21 shown in Figure 2, the space section 4 was evacuated using the vacuum pump 22 through the gas inlet opening 3b (provided on the bottom surface 3c of the outer shell member 3) and the gas passage 31a of the protrusion section 31 to a pressure of less than 10 Torr. Then, the space section 4 was filled with krypton gas to a pressure of about 1.05x10⁵ Pa.

Next, the gas admission apparatus 21 was removed, and an electric iron heated to a temperature of about 300∼400 °C was placed in contact with the protrusion section 31 to melt the protrusion section 31, thereby fusing the gas passage 31a and filling the channel 32 with the melted material of the protrusion section 31 to produce a seal.

The appearance of the seal thus produced was quite dense and intimately fused such that the original location of the gas inlet opening 3b was totally invisible.

Therefore, it has been demonstrated that the fusion sealing method of the present invention has enabled to eliminate the cumbersome requirements which had been necessary for adhesive sealing methods, such as positioning of the parts before adhesive bonding, appropriate selection of an adhesive and uniform coating of the adhesive. The method of fusion sealing is not only efficient but more convenient and is able to produce a reliably superior seal.

## Claims

1. A method for making a double-walled thermally insulated implement, comprised by an outer shell member (3) and an inner shell member (2), comprising the steps of:
assembling an outer shell member (3), having a concave-shape and is made of a synthetic resin, over an inner shell member (2), having a similar but smaller concave-shape and is made of said synthetic resin so as to provide a space section (4) between said outer shell member (3) and said inner shell member (2);
producing a double-walled structure of an integrally bonded unit by joining an open mouth of said outer shell (3) member to an open mouth of said inner shell member (2) at mouth peripheries (2a, 3a);
introducing air or a gaseous substance, having a lower thermal conductivity than air, into said space section (4) through a gas inlet opening (3b) provided on one of said outer shell member (3) or said inner shell member (2); and
fusion sealing said gas inlet opening (3b) by melting a peripheral section (z) surrounding said gas inlet opening (3b).

2. A method according to claim 1, wherein said gas inlet opening (3b) is formed on one of said outer shell member (3) or said inner shell member (2) prior to producing a double-walled structure.

3. A method according to claim 1, wherein said gas inlet opening (3b) is formed on one of said outer shell member (3) or inner shell member (2) concurrently with or after producing a double-walled structure.

4. A method according to one of claims 1 to 3, wherein said peripheral section (z) has a shell thickness which is thicker than a bulk shell thickness.

5. A method according to one of claims 1 to 3, wherein a gas inlet opening (3b) provided on one of said outer shell member (3) or said inner shell member (2) is surrounded by a protrusion section (31) extending away from said peripheral section provided on a surface not facing said space section (4) between said outer shell member (3) and said inner shell member(2).

6. A method according to claim 5, wherein said protrusion section (31) has a depression channel (32) formed about a base section of said protrusion section (31).

7. A method according to one of claims 1 to 6, wherein said outer shell member (3) is comprised of a double-layered material (43) having two synthetic resins (43x, 43y) of different functional properties, and said inner shell member (2) is comprised of a double-layered material (42) having two synthetic resins (42x, 42y) of different functional properties.

8. A method according to claim 7, wherein said two synthetic resins of different functional properties represent a moisture-resistant synthetic resin and a gas barrier synthetic resin.

9. A method according to claim 1, wherein said implement is a container vessel (1).

10. A method according to claim 1, wherein said implement is a lid (51) for a container vessel.
